# EUROPEAN PATENT APPLICATION

(11) **EP 3 699 890 A2**
(43) Date of publication of application: **26.08.2020**
(21) Application number: 20158396.0
(22) Date of filing: 20.02.2020
(51) Int. Cl.: G08G 1/16

(54) **INFORMATION PROCESSING METHOD AND APPARATUS, AND STORAGE MEDIUM**

(30) Priority: 21.02.2019 CN 201910130652
(71) Applicant: Baidu Online Network Technology (Beijing) Co., Ltd., Beijing 100085 (CN)
(72) Inventor: GAO, Fei, BEIJING, Haidian District 100085 (CN)
(74) Representative: Lavoix

(57) **Abstract**

The embodiments of the present application provide an information processing method and apparatus, and a storage medium. The method includes: collecting at least two pieces of first information obtained based on driving behaviors; obtaining at least two pieces of first feature information according to the at least two pieces of first information; identifying the at least two pieces of first feature information to obtain label information respectively corresponding to the at least two pieces of first feature information; obtaining a sample set according to the at least two pieces of first feature information and the label information; establishing a relation model according to the sample set, the relation model representing at least one of a relation between a travelling route of a vehicle and an environment around the vehicle, a relation between a position of the vehicle and the environment around the vehicle, a relation between the travelling route of the vehicle and an obstacle, and a relation between the position of the vehicle and the obstacle; and selecting a lane to be changed, according to the relation model. According to the embodiments of the present, an accuracy on changing a lane is increased.

## Description

### TECHNICAL FIELD

The present disclosure relates to information processing, and particularly to information processing method and apparatus, and storage medium.

### BACKGROUND

Information processing may be used in vehicle automatic driving. In order to project the vehicle automatic driving, it is needed to evaluate the movement trajectory of the vehicle. The lane change is an important part of the movement trajectory. In the related arts, the driver's experiences are used to select a lane to make a decision of a lane changing. However, the decision obtained just from the driver's experiences is simple, and the determination of the environment around the vehicle, such as with obstacles, is inaccurate, which will easily lead to a poor accuracy on the lane change. Especially in various complex scenes, it is difficult to ensure the feasibility and safety of the lane change during driving.

### SUMMARY

An information processing method and apparatus, and storage medium are provided according to embodiments of the present disclosure, so as to at least solve the above technical problems in the existing technology.

According to a first aspect, an information processing method includes:
collecting at least two pieces of first information obtained based on driving behaviors;
obtaining at least two pieces of first feature information according to the at least two pieces of first information;
identifying the at least two pieces of first feature information to obtain label information respectively corresponding to the at least two pieces of first feature information;
obtaining a sample set, according to the at least two pieces of first feature information and the label information respectively corresponding to the at least two pieces of first feature information;
establishing a relation model according to the sample set, the relation model representing at least one of a relation between a travelling route of a vehicle and an environment around the vehicle, a relation between a position of the vehicle and the environment around the vehicle, a relation between the travelling route of the vehicle and an obstacle, and a relation between the position of the vehicle and the obstacle; and
selecting a lane to be changed, according to the relation model.

In an embodiment, the establishing a relation model according to the sample set includes:
obtaining a region to be processed according to a current travelling lane of the vehicle and a lane adjacent to the current travelling lane; and
dividing the region to be processed into at least two passable regions according to preset cells.

In an embodiment, in a coordinate system taking a travelling route of the vehicle as a horizontal axis, the passable region is divided by:
in a horizontal axis direction and taking a center of the vehicle as an origin, obtaining a region within a distance corresponding to a preset distance parameter from the origin forwards along the horizontal axis, according to a preset distance parameter; and/or obtaining a region within a distance corresponding to a preset distance parameter from the origin backwards along the horizontal axis, according to a preset distance parameter.

In an embodiment, in the coordinate system taking the travelling route of the vehicle as the horizontal axis, the passable region is divided by: at least setting two lanes on a left side and a right side adjacent to the current travelling lane.

In an embodiment, the information processing method further includes:
acquiring images of a travelling condition of the vehicle on the current travelling lane by frames; and obtaining at least one of the relation between the travelling route of the vehicle and the environment around the vehicle, the relation between the position of the vehicle and the environment around the vehicle, the relation between the travelling route of the vehicle and the obstacle, and the relation between the position of the vehicle and the obstacle, according to the acquired travelling images; and
establishing the relation model by using the relation as attribute information of the passable region.

In an embodiment, the information processing method further includes:
obtaining at least two pieces of second feature information by cutting the passable region with the obstacle from the at least two passable regions; and establishing the relation mode by using the at least two pieces of second feature information.

In an embodiment, the selecting a lane to be changed, according to the relation model comprises:
obtaining a neural network according to the relation model, wherein the neural network comprises at least two sub-neural networks associated with lane change functions;
inputting the at least two pieces of second feature information and the label information of each first feature information into the at least two sub-neural networks for operation, to obtain at least two lane change probabilities;
obtaining a lane change probability of a target vehicle according to the at least two lane change probabilities; and
selecting the lane according to the lane change probability of the target vehicle.

According to a second aspect, an information processing apparatus includes:
a collecting unit configured to collect at least two pieces of first information obtained based on driving behaviors;
a first processing unit configured to obtain at least two pieces of first feature information according to the at least two pieces of first information;
a second processing unit configured to identify the at least two pieces of first feature information to obtain label information respectively corresponding to the at least two pieces of first feature information;
a third processing unit configured to obtain a sample set, according to the at least two pieces of first feature information and the label information respectively corresponding to the at least two pieces of first feature information;
a modeling unit configured to establish a relation model according to the sample set, the relation model representing at least one of a relation between a travelling route of a vehicle and an environment around the vehicle, a relation between a position of the vehicle and the environment around the vehicle, a relation between the travelling route of the vehicle and an obstacle, and a relation between the position of the vehicle and the obstacle; and
a lane change selecting unit configured to select a lane to be changed, according to the relation model.

In an embodiment, the modeling unit is further configured to:
obtain a region to be processed according to a current travelling lane of the vehicle and a lane adjacent to the current travelling lane; and
divide the region to be processed into at least two passable regions according to preset cells.

In an embodiment, in a coordinate system taking a travelling route of the vehicle as a horizontal axis, the passable region is divided by: in a horizontal axis direction and taking a center of the vehicle as an origin, obtaining a region within a distance corresponding to a preset distance parameter from the origin forwards along the horizontal axis, according to a preset distance parameter; and/or obtaining a region within a distance corresponding to a preset distance parameter from the origin backwards along the horizontal axis, according to a preset distance parameter.

In an embodiment, in the coordinate system taking the travelling route of the vehicle as the horizontal axis, the passable region is divided by: at least setting two lanes on a left side and a right side adjacent to the current travelling lane.

In an embodiment, the information processing apparatus further includes:
an acquiring unit configured to acquire images of a travelling condition of the vehicle on the current travelling lane by frames; and obtaining at least one of the relation between the travelling route of the vehicle and the environment around the vehicle, the relation between the position of the vehicle and the environment around the vehicle, the relation between the travelling route of the vehicle and the obstacle, and the relation between the position of the vehicle and the obstacle, according to the acquired travelling images; and
an attribute determining unit configured to establish the relation model by using the relation as attribute information of the passable region.

In an embodiment, the information processing apparatus further includes:
a cutting unit configured to obtain at least two pieces of second feature information by cutting the passable region with the obstacle from the at least two passable regions; and establishing the relation mode by using the at least two pieces of second feature information.

In an embodiment, the lane change selecting unit is further configured to:
obtain a neural network according to the relation model, wherein the neural network comprises at least two sub-neural networks associated with lane change functions;
input the at least two pieces of second feature information and the label information of each first feature information into the at least two sub-neural networks for operation, to obtain at least two lane change probabilities;
obtain a lane change probability of a target vehicle according to the at least two lane change probabilities; and
select the lane according to the lane change probability of the target vehicle.

According to a third aspect, an information processing apparatus is provided, and the functions thereof may be implemented by hardware or by hardware to execute corresponding software. The hardware or the software includes one or more modules corresponding to the above functions.

In a possible embodiment, a structure of the apparatus includes a memory configured to store a program for supporting the above information processing methods executed by the apparatus, and a processor configured to execute the program stored in the memory. The apparatus may further include a communication interface configured to communicate with other apparatus or communication network.

According to a fourth aspect, a non-volatile computer-readable storage medium is provided for storing computer software instructions used by the information processing apparatus, the computer software instructions include programs involved in execution of the above information processing method.

According to the embodiments of the present disclosure, at least two pieces of first information on driving behaviors are acquired, and at least two pieces of first feature information are obtained according to the at least two pieces of first information. The at least two pieces of first feature information are identified to obtain the label information related to the at least two pieces of first feature information, and a sample set is obtained according to the at least two pieces of first feature information and the label information. The information in the sample set are closer to a current driving condition because the sample set is constructed by the feature information and the label information, rather than only the driving behaviors. According to the sample set, it is possible to establish a relation model representing a relation between a predicted travelling route of a vehicle and the environment around the vehicle such as the obstacle, or a relation between a position of the vehicle and the environment around the vehicle. In this way, the lane selecting with the relation model is more accurate, improving the lane change accuracy and ensures the feasibility and safety of the lane change during driving.

The above summary is for the purpose of the specification only and is not intended to be limiting in any way. In addition to the illustrative aspects, embodiments, and characters described above, further aspects, embodiments, and characters of the present disclosure will be readily understood by reference to the drawings and the following detailed description.

### BRIEF DESCRIPTION OF THE DRAWINGS

In the drawings, unless otherwise specified, identical reference numerals will be used throughout the drawings to refer to identical or similar parts or elements. The drawings are not necessarily drawn to scale. It should be understood that these drawings depict only some embodiments disclosed in accordance with the present disclosure and are not to be considered as limiting the scope of the present disclosure.
Fig. 1 illustrates a flowchart of an information processing method according to an embodiment of the present disclosure.
Fig. 2 illustrates a schematic diagram of a passable region of a vehicle travelling route according to an embodiment of the present disclosure.
Fig. 3 illustrates a parameter configuration diagram of a divided passable region according to an embodiment of the present disclosure.
Fig. 4 illustrates a flowchart of establishing a relation model according to a sample set according to an embodiment of the present disclosure.
Fig. 5 illustrates a flowchart of selecting a lane according to a relation model according to an embodiment of the present disclosure.
Fig. 6 illustrates a block diagram of an information processing apparatus according to an embodiment of the present disclosure.
Fig. 7 illustrates a block diagram of an information processing apparatus according to an embodiment of the present disclosure.

### DETAILED DESCRIPTION OF THE EMBODIMENTS

In the following, only certain exemplary embodiments are briefly described. As those skilled in the art would realize, the described embodiments may be modified in various different ways, all without departing from the spirit or scope of the present disclosure. Accordingly, the drawings and description are to be regarded as illustrative in nature and not restrictive.

In the related arts, during an automatic driving, it is needed to evaluate a travelling trajectory. Specifically, during a lane change of the vehicle, it is very important to select a lane to deal with various complex travelling conditions, ensuring a feasibility and safety for the lane change. During the automatic driving, the driver's experiences are taken to build a model through driving rules and some specific thresholds, to make the lane change of the vehicle. In the related arts, the environmental information is simple, and the adopted rules and thresholds are relatively inflexible and mechanical. Thus, the timing of the lane change is usually not optimum, various bad cases may easily occur (some samples inconsistent with the actual travelling condition may be referred to bad cases), leading to a poor flexibility of the lane change.

According to the following embodiments of the present disclosure, a sample set for building a relation model may be obtained through first feature information (such as an acceleration, a speed, etc.) and label information (such as lane change leftward, lane change rightward, a straight travel, etc.), wherein the first feature information is obtained from driving behaviors and the label information is related to the first feature information. The established relation model accurately describes a relation among a travelling route, a main vehicle and an obstacle. Thus, selecting the lane based on the relation model improves the accuracy of the lane change.

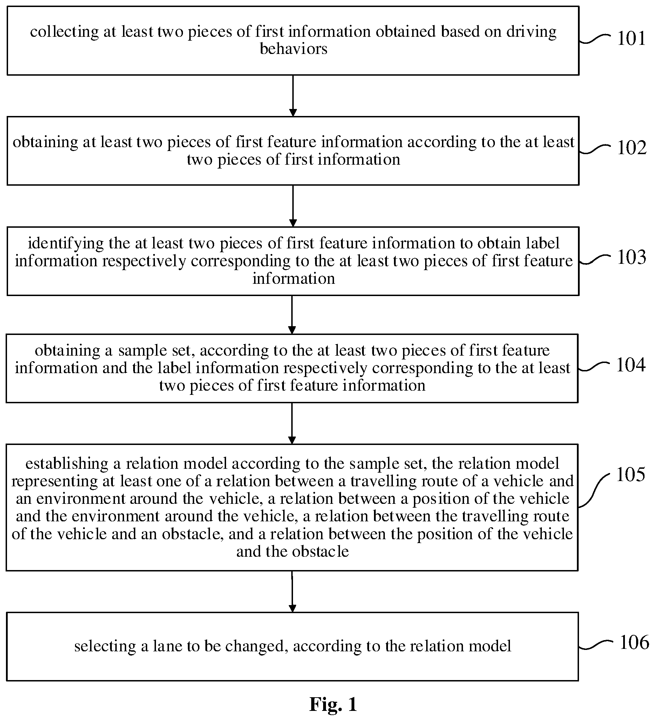

Fig. 1 illustrates a flowchart of an information processing method according to an embodiment of the present disclosure. As illustrated in Fig. 1, the method includes:
101: collecting at least two pieces of first information obtained based on driving behaviors.
102: obtaining at least two pieces of first feature information according to the at least two pieces of first information.
103: identifying the at least two pieces of first feature information to obtain label information respectively corresponding to the at least two pieces of first feature information.
104: obtaining a sample set, according to the at least two pieces of first feature information and the label information respectively corresponding to the at least two pieces of first feature information.
105: establishing a relation model according to the sample set, the relation model representing at least one of a relation between a travelling route of a vehicle and an environment around the vehicle, a relation between a position of the vehicle and the environment around the vehicle, a relation between the travelling route of the vehicle and an obstacle, and a relation between the position of the vehicle and the obstacle.
106: selecting a lane to be changed, according to the relation model.

In one embodiment, the pieces of information obtained from a vehicle travelling on any lanes are acquired by frames. Specifically, the pieces of information are driving behaviors of a driver. The driving behaviors during driving are obtained, i.e., taking the pieces of information as historical data, and the pieces of feature information, such as an acceleration, a speed and a speed limit, etc., are obtained according to the historical data. For example, the acceleration, the speed and the speed limit, etc., constitute pieces of first feature information. The pieces of first feature information such as the acceleration, the speed and the speed limit, etc., are identified and labeled to obtain the pieces of label information such as a lane change leftward, a lane change rightward, or a straight travel. The pieces of first feature information and the pieces of label information are taken as a sample set that is input into a relation model for evaluating whether a lane change is necessary. In modeling according to the sample set, a deep learning is made to the sample set to obtain the relation model. The relation model may represent a relation between the travelling route of the vehicle and the environment around the vehicle, a relation between the position of the vehicle and the environment around the vehicle, a relation between the travelling route of the vehicle and an obstacle around the vehicle, and a relation between the position of the vehicle and an obstacle around the vehicle. Since the relation model may accurately describe the relation among the travelling route, the main vehicle and the obstacle, the lane changing may be selected with the relation model, to improve the accuracy of lane changing. Particularly, in various complex travelling conditions, the feasibility and safety of the lane change during driving may be ensured.

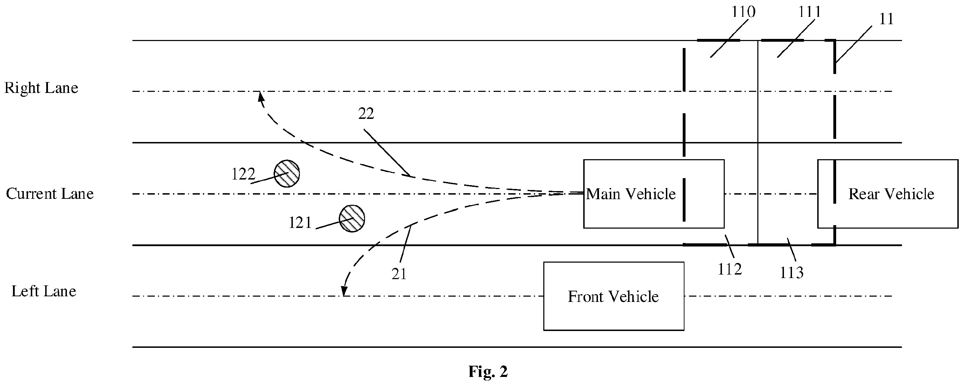

In an embodiment, Fig. 2 illustrates a schematic diagram of a passable region of a vehicle travelling route. In depth learning for modeling, a method for modeling the relation model is adopted to model a high-dimensional cell-based passable region for a route navigation and the obstacle, so as to describe a relation between the travelling route of the vehicle and the environment around the vehicle, a relation between the position of the vehicle and the environment around the vehicle, a relation between the travelling route of the vehicle and an obstacle around the vehicle, and a relation between the position of the vehicle and an obstacle around the vehicle. In the high-dimensional modeling, due to many combinations of the cells and the features as well as sparsity of model, the learning of model is technically difficult. In an embodiment of the present disclosure, the relation model and the shared sub-neural network technology (each sub-neural network in the neural network is formed by the relation model, wherein the sub-neural networks respectively expresses various relations, such as a lane blocking, a rear collision and simultaneous lane changes, etc.) may significantly reduce the difficulty in the deep learning.

To obtain a relation model according to the sample set, a region 11 to be processed may be obtained according to a current travelling lane of the vehicle and an adjacent lane. The region to be processed is divided into at least two passable regions according to preset cells. As illustrated in Fig. 2, the region 11 to be processed is divided into four passable regions, i.e., a passable region 110, a passable region 111, a passable region 112 and a passable region 113. During a travelling condition where the current vehicle is a main vehicle travelling on the current lane, there are a front vehicle at a front position relative to the main vehicle and a rear vehicle at a rear position relative to the main vehicle. If the illustrated obstacles 121 and 122 are on the current lane, in order to ensure a safe driving, the main vehicle may need to change to the adjacent lane (the left lane or the right lane) from the current lane. A lane change trajectory, i.e., a lane change trajectory 21 or a lane change trajectory 22, should be selected according to the relation model.

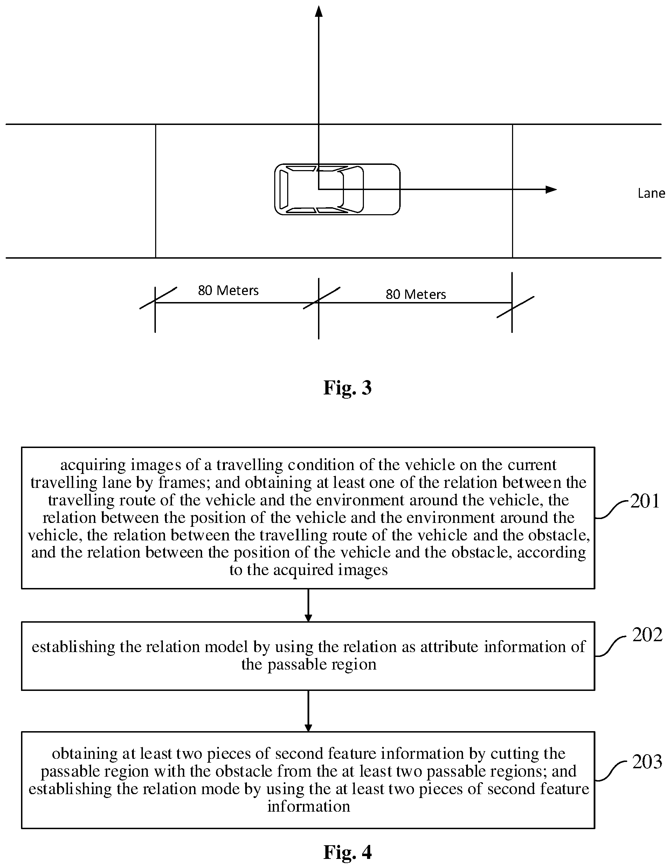

In an embodiment, the passable region may be divided through the following: 1) in a coordinate system taking a center of the vehicle as an origin and a travelling route of the vehicle as a horizontal axis, determining the region to be processed within a preset distance parameter range forwards along the horizontal axis from the origin, as the passable region; and/or determining the region to be processed within a preset distance parameter range backwards along the horizontal axis from the origin, as the passable region. 2) In a longitudinal direction perpendicular to the horizontal axis, the passable region includes at least a current travelling lane of the vehicle, and a lane on a left side and a right side of the current travelling lane of the vehicle. Fig. 3 illustrates a schematic diagram of a parameter configuration of a divided passable region. If the distance parameter is 80 meters, the passable region is forwards or backwards for 80 meters from the center of the vehicle, and there may be a left lane and a right lane on the left and right of this passable region respectively. The embodiment of the present disclosure is not limited to the given parameter configuration.

In one embodiment, Fig. 4 illustrates a flowchart of establishing a relation model according to a sample set. As illustrated in Fig. 4, the method includes:
201: acquiring images of a travelling condition of the vehicle on the current travelling lane by frames; and obtaining at least one of the relation between the travelling route of the vehicle and the environment around the vehicle, the relation between the position of the vehicle and the environment around the vehicle, the relation between the travelling route of the vehicle and the obstacle, and the relation between the position of the vehicle and the obstacle, according to the acquired travelling images.
202: establishing the relation model by using the relation as attribute information of the passable region.
203: obtaining at least two pieces of second feature information by cutting the passable region with the obstacle from the at least two passable regions; and establishing the relation mode by using the at least two pieces of second feature information.

In one embodiment, the passable region may have a plurality of cells, regardless of the obstacles present or not, and different cells represent different feature values. The cells with the obstacle in the passable region is segmented, and are inputted in combination with the sample set (the previously identified labels, such as a straight travel without a lane change, a lane change leftward, or a lane change rightward), into each sub-neural network related to the neural network formed by the relation model, to be processed.

It should be pointed out that the obstacle information includes static and moving obstacles. For example, the front vehicle at the front position of the main vehicle and on the same lane as the main vehicle are also regarded as obstacles.

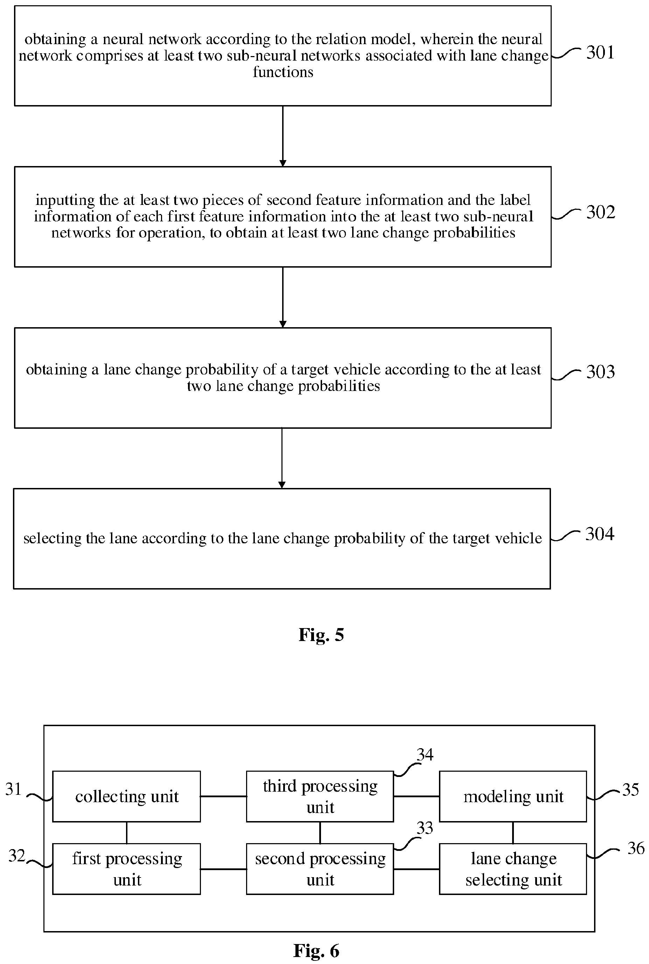

In one embodiment, Fig. 5 illustrates a flowchart of selecting a lane according to a relation model. As illustrated in Fig. 5, the flow includes:
301: obtaining a neural network according to the relation model, wherein the neural network comprises at least two sub-neural networks associated with lane change functions.
302: inputting the at least two pieces of second feature information and the label information of each first feature information into the at least two sub-neural networks for operation, to obtain at least two lane change probabilities.
303: obtaining a lane change probability of a target vehicle according to the at least two lane change probabilities.
304: selecting the lane according to the lane change probability of the target vehicle.

According to the embodiments of the present disclosure, a lane change probability is obtained according to the operation by the sub-neural network, and the lane change probability is an output result used for evaluating indicating whether a lane change is to be made. The operation of the sub-neural network may be calculated with the combination of the network weights of various neural network layers such as GRU, Dense, etc. The feature vector is global, and will be deformed or sliced by the sub-neural network. For example, the products of weights and features are accumulated and then a calculation is made with a non-linear function, which belongs to the category of neural networks. Further, the sub-relations such as lane change intention, blocking, collision, lane change confliction, etc. are expressed by means of a functional region, a shared sub-neural network and a spatial sequence, and finally the lane change probability is output as an evaluation result for selecting the lane. Specifically, the functional region is a region that is segmented from the passable region according to the relation of the features and is concerned by this relation. The sub-neural networks are those in the neural network. The shared sub-neural network is a small network used for different data, but with the same weight. For example, regarding the blocking, the obstruction is the same under the same layout of the obstacles whether on the current travelling lane or other lanes, and the same functional combination relation and weight are adopted. The spatial sequence is a sequence of cells from the farthest to the nearest (the front or the rear), which are processed by a sequence neural network GRU.

Fig. 6 illustrates a structural block diagram of an information processing apparatus according to an embodiment of the present disclosure. As illustrated in Fig. 6, the apparatus includes: a collecting unit 31 configured to collect at least two pieces of first information obtained based on driving behavior; a first processing unit 32 configured to obtain at least two pieces of first feature information according to the at least two pieces of first information; a second processing unit 33 configured to identify the at least two pieces of first feature information to obtain label information respectively corresponding to the at least two pieces of first feature information; a third processing unit 34 configured to obtain a sample set, according to the at least two pieces of first feature information and the label information respectively corresponding to the at least two pieces of first feature information; a modeling unit 35 configured to establish a relation model according to the sample set, the relation model representing at least one of a relation between a travelling route of a vehicle and an environment around the vehicle, a relation between a position of the vehicle and the environment around the vehicle, a relation between the travelling route of the vehicle and an obstacle, and a relation between the position of the vehicle and the obstacle; a lane change selecting unit 36 configured to a lane to be changed, according to the relation model.

In an embodiment, the modeling unit is further configured to obtain a region to be processed according to a current travelling lane of the vehicle and a lane adjacent to the current travelling lane; and divide the region to be processed into at least two passable regions according to preset cells.

In an embodiment, in a coordinate system taking a travelling route of the vehicle as a horizontal axis, the passable region is divided by: in a horizontal axis direction and taking a center of the vehicle as an origin, obtaining a region within a distance corresponding to a preset distance parameter from the origin forwards along the horizontal axis, according to a preset distance parameter; and/or obtaining a region within a distance corresponding to a preset distance parameter from the origin backwards along the horizontal axis, according to a preset distance parameter.

In an embodiment, the passable region is divided through the following: in a coordinate system taking a center of the vehicle as an origin and a travelling route of the vehicle as a horizontal axis, determining the region to be processed within a preset distance parameter range forwards along the horizontal axis from the origin, as the passable region; and/or determining the region to be processed within a preset distance parameter range backwards along the horizontal axis from the origin, as the passable region. In a longitudinal axis direction, the coordinate system includes at least a current travelling lane of the vehicle and a lane on a left side or a right side of the current travelling lane.

In an embodiment, the apparatus further includes: an acquiring unit configured to acquire images of a travelling condition of the vehicle on the current travelling lane by frames; and obtaining at least one of the relation between the travelling route of the vehicle and the environment around the vehicle, the relation between the position of the vehicle and the environment around the vehicle, the relation between the travelling route of the vehicle and the obstacle, and the relation between the position of the vehicle and the obstacle, according to the acquired travelling images; and an attribute determining unit configured to establish the relation model by using the relation as attribute information of the passable region.

In an embodiment, the apparatus further includes: a cutting unit configured to obtain at least two pieces of second feature information by cutting the passable region with the obstacle from the at least two passable regions; and establishing the relation mode by using the at least two pieces of second feature information. The at least two pieces of second feature information is based on the passable region with the obstacle in the at least two passable regions, wherein the modeling unit is configured to establish the relation mode according to the at least two pieces of second feature information.

In an embodiment, the lane change selecting unit is further configured to obtain a neural network according to the relation model, wherein the neural network comprises at least two sub-neural networks associated with lane change functions; input the at least two pieces of second feature information and the label information of each first feature information into the at least two sub-neural networks for operation, to obtain at least two lane change probabilities; obtain a lane change probability of a target vehicle according to the at least two lane change probabilities; and select the lane according to the lane change probability of the target vehicle.

The function of each of the modules in the apparatus according to the embodiments of the present disclosure may refer to corresponding descriptions in the above method, and will not be repeated here.

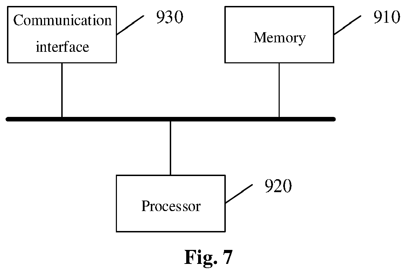

Fig. 7 illustrates a structural block diagram of an information processing apparatus according to an embodiment of the present disclosure. The apparatus may be applied to a vehicle with an automatic driving function. As illustrated in Fig. 7, the apparatus includes a memory 910 and a processor 920, wherein a computer program executable on the processor 920 is stored in the memory 910. When the processor 920 executes the computer program, the lane selecting method in the above embodiment is implemented. There may be one or more memories 910 and one or more processors 920.

The apparatus further includes a communication interface 930 configured to communicate with an external device for a data interactive transmission.

The memory 910 may include a high-speed RAM memory and may also include a non-volatile memory, such as at least one magnetic disk memory.

If the memory 910, the processor 920, and the communication interface 930 are implemented independently, the memory 910, the processor 920, and the communication interface 930 may be connected to each other through a bus and communicate with one another. The bus may be an Industry Standard Architecture (ISA) bus, a Peripheral Component (PCI) bus, an Extended Industry Standard Component (EISA) bus, or the like. The bus may be divided into an address bus, a data bus, a control bus, and the like. For ease of illustration, only one bold line is shown in FIG. 7, but it does not mean that there is only one bus or one type of bus.

Optionally, in a specific implementation, if the memory 910, the processor 920, and the communication interface 930 are integrated on one chip, the memory 910, the processor 920, and the communication interface 930 may implement mutual communication through an internal interface.

According to an embodiment of the present disclosure, a non-volatile computer-readable storage medium is provided for storing computer software instructions, which include programs involved in execution of the above lane selecting method.

In the description of the specification, the description of the terms "one embodiment," "some embodiments," "an example," "a specific example," or "some examples" and the like means the specific characters, structures, materials, or characteristics described in connection with the embodiment or example are included in at least one embodiment or example of the present disclosure. Furthermore, the specific characters, structures, materials, or characteristics described may be combined in any suitable manner in any one or more of the embodiments or examples. In addition, different embodiments or examples described in this specification and characters of different embodiments or examples may be incorporated and combined by those skilled in the art without mutual contradiction.

In addition, the terms "first" and "second" are used for descriptive purposes only and are not to be construed as indicating or implying relative importance or implicitly indicating the number of indicated technical characters. Thus, characters defining "first" and "second" may explicitly or implicitly include at least one of the characters. In the description of the present disclosure, "a plurality of" means two or more, unless expressly limited otherwise.

Any process or method descriptions described in flowcharts or otherwise herein may be understood as representing modules, segments or portions of code that include one or more executable instructions for implementing the steps of a particular logic function or process. The scope of the preferred embodiments of the present disclosure includes additional implementations where the functions may not be performed in the order shown or discussed, including according to the functions involved, in substantially simultaneous or in reverse order, which should be understood by those skilled in the art to which the embodiment of the present disclosure belongs.

Logic and/or steps, which are represented in the flowcharts or otherwise described herein, for example, may be thought of as a sequencing listing of executable instructions for implementing logic functions, which may be embodied in any computer-readable medium, for use by or in connection with an instruction execution system, device, or apparatus (such as a computer-based system, a processor-included system, or other system that fetch instructions from an instruction execution system, device, or apparatus and execute the instructions). For the purposes of this specification, a "computer-readable medium" may be any device that may contain, store, communicate, propagate, or transport the program for use by or in connection with the instruction execution system, device, or apparatus. More specific examples (not a non-exhaustive list) of the computer-readable media include the following: electrical connections (electronic devices) having one or more wires, a portable computer disk cartridge (magnetic device), random access memory (RAM), read only memory (ROM), erasable programmable read only memory (EPROM or flash memory), optical fiber devices, and portable read only memory (CDROM). In addition, the computer-readable medium may even be paper or other suitable medium upon which the program may be printed, as it may be read, for example, by optical scanning of the paper or other medium, followed by editing, interpretation or, where appropriate, process otherwise to electronically obtain the program, which is then stored in a computer memory.

It should be understood that various portions of the present disclosure may be implemented by hardware, software, firmware, or a combination thereof. In the above embodiments, multiple steps or methods may be implemented in software or firmware stored in memory and executed by a suitable instruction execution system. For example, if implemented in hardware, as in another embodiment, they may be implemented using any one or a combination of the following techniques well known in the art: discrete logic circuits having a logic gate circuit for implementing logic functions on data signals, disclosure specific integrated circuits with suitable combinational logic gate circuits, programmable gate arrays (PGA), field programmable gate arrays (FPGAs), and the like.

Those skilled in the art may understand that all or some of the steps carried in the methods in the foregoing embodiments may be implemented by a program instructing relevant hardware. The program may be stored in a non-volatile computer-readable storage medium, and when executed, one of the steps of the method embodiment or a combination thereof is included.

In addition, each of the functional units in the embodiments of the present disclosure may be integrated in one processing module, or each of the units may exist alone physically, or two or more units may be integrated in one module. The above-mentioned integrated module may be implemented in the form of hardware or in the form of software functional module. When the integrated module is implemented in the form of a software functional module and is sold or used as an independent product, the integrated module may also be stored in a non-volatile computer-readable storage medium. The storage medium may be a read only memory, a magnetic disk, an optical disk, or the like.

The foregoing descriptions are merely specific embodiments of the present disclosure, but not intended to limit the protection scope of the present disclosure. Those skilled in the art may easily conceive of various changes or modifications within the technical scope disclosed herein, all these should be covered within the protection scope of the present disclosure. Therefore, the protection scope of the present disclosure should be subject to the protection scope of the claims.

## Claims

1. An information processing method, comprising:
collecting (S101) at least two pieces of first information obtained based on driving behaviors;
obtaining (S102) at least two pieces of first feature information according to the at least two pieces of first information;
identifying (S 103) the at least two pieces of first feature information to obtain label information respectively corresponding to the at least two pieces of first feature information;
obtaining (S104) a sample set, according to the at least two pieces of first feature information and the label information respectively corresponding to the at least two pieces of first feature information;
establishing (S105) a relation model according to the sample set, the relation model representing at least one of a relation between a travelling route of a vehicle and an environment around the vehicle, a relation between a position of the vehicle and the environment around the vehicle, a relation between the travelling route of the vehicle and an obstacle, and a relation between the position of the vehicle and the obstacle; and
selecting (S106) a lane to be changed, according to the relation model.

2. The information processing method according to claim 1, wherein the establishing (S105) a relation model according to the sample set comprises:
obtaining a region to be processed according to a current travelling lane of the vehicle and a lane adjacent to the current travelling lane; and
dividing the region to be processed into at least two passable regions according to preset cells.

3. The information processing method according to claim 2, wherein in a coordinate system taking a travelling route of the vehicle as a horizontal axis, the passable region is divided by:
in a horizontal axis direction and taking a center of the vehicle as an origin, obtaining a region within a distance corresponding to a preset distance parameter from the origin forwards along the horizontal axis, according to a preset distance parameter; and/or obtaining a region within a distance corresponding to a preset distance parameter from the origin backwards along the horizontal axis, according to a preset distance parameter.

4. The information processing method according to claim 3, wherein in the coordinate system taking the travelling route of the vehicle as the horizontal axis, the passable region is divided by: at least setting two lanes on a left side and a right side adjacent to the current travelling lane.

5. The information processing method according to any one of claims 2-4, further comprising:
acquiring (S201) images of a travelling condition of the vehicle on the current travelling lane by frames; and obtaining at least one of the relation between the travelling route of the vehicle and the environment around the vehicle, the relation between the position of the vehicle and the environment around the vehicle, the relation between the travelling route of the vehicle and the obstacle, and the relation between the position of the vehicle and the obstacle, according to the acquired travelling images; and
establishing (S202) the relation model by using the relation as attribute information of the passable region.

6. The information processing method according to claim 5, further comprising:
obtaining (S203) at least two pieces of second feature information by cutting the passable region with the obstacle from the at least two passable regions; and establishing the relation mode by using the at least two pieces of second feature information.

7. The information processing method according to claim 6, wherein the selecting (S106) a lane to be changed, according to the relation model comprises:
obtaining (S301) a neural network according to the relation model, wherein the neural network comprises at least two sub-neural networks associated with lane change functions;
inputting (S302) the at least two pieces of second feature information and the label information of each first feature information into the at least two sub-neural networks for operation, to obtain at least two lane change probabilities;
obtaining (S303) a lane change probability of a target vehicle according to the at least two lane change probabilities; and
selecting (S304) the lane according to the lane change probability of the target vehicle.

8. An information processing apparatus, comprising:
a collecting unit (31) configured to collect at least two pieces of first information obtained based on driving behaviors;
a first processing unit (32) configured to obtain at least two pieces of first feature information according to the at least two pieces of first information;
a second processing unit (33) configured to identify the at least two pieces of first feature information to obtain label information respectively corresponding to the at least two pieces of first feature information;
a third processing unit (34) configured to obtain a sample set, according to the at least two pieces of first feature information and the label information respectively corresponding to the at least two pieces of first feature information;
a modeling unit (35) configured to establish a relation model according to the sample set, the relation model representing at least one of a relation between a travelling route of a vehicle and an environment around the vehicle, a relation between a position of the vehicle and the environment around the vehicle, a relation between the travelling route of the vehicle and an obstacle, and a relation between the position of the vehicle and the obstacle; and
a lane change selecting unit (36) configured to select a lane to be changed, according to the relation model.

9. The information processing apparatus according to claim 8, wherein the modeling unit (35) is further configured to:
obtain a region to be processed according to a current travelling lane of the vehicle and a lane adjacent to the current travelling lane; and
divide the region to be processed into at least two passable regions according to preset cells.

10. The information processing apparatus according to claim 9, wherein
in a coordinate system taking a travelling route of the vehicle as a horizontal axis, the passable region is divided by:
in a horizontal axis direction and taking a center of the vehicle as an origin, obtaining a region within a distance corresponding to a preset distance parameter from the origin forwards along the horizontal axis, according to a preset distance parameter; and/or obtaining a region within a distance corresponding to a preset distance parameter from the origin backwards along the horizontal axis, according to a preset distance parameter.

11. The information processing apparatus according to claim 10, wherein in the coordinate system taking the travelling route of the vehicle as the horizontal axis, the passable region is divided by: at least setting two lanes on a left side and a right side adjacent to the current travelling lane.

12. The information processing apparatus according to any one of claims 9-11, further comprising:
an acquiring unit configured to acquire images of a travelling condition of the vehicle on the current travelling lane by frames; and obtaining at least one of the relation between the travelling route of the vehicle and the environment around the vehicle, the relation between the position of the vehicle and the environment around the vehicle, the relation between the travelling route of the vehicle and the obstacle, and the relation between the position of the vehicle and the obstacle, according to the acquired travelling images; and
an attribute determining unit configured to establish the relation model by using the relation as attribute information of the passable region.

13. The information processing apparatus according to claim 12, further comprising:
a cutting unit configured to obtain at least two pieces of second feature information by cutting the passable region with the obstacle from the at least two passable regions; and establishing the relation mode by using the at least two pieces of second feature information.

14. The information processing apparatus according to claim 13, wherein the lane change selecting unit (36) is configured to:
obtain a neural network according to the relation model, wherein the neural network comprises at least two sub-neural networks associated with lane change functions;
input the at least two pieces of second feature information and the label information of each first feature information into the at least two sub-neural networks for operation, to obtain at least two lane change probabilities;
obtain a lane change probability of a target vehicle according to the at least two lane change probabilities; and
select the lane according to the lane change probability of the target vehicle.

15. A computer-readable storage medium, in which a computer program is stored, wherein the computer program, when executed by a processor, implements the information processing method of any one of claims 1-7.
